# EUROPÄISCHE PATENTSCHRIFT

(11) **EP 2 590 279 B1**
(45) Veröffentlichungstag und Bekanntmachung des Hinweises auf die Patenterteilung: **12.08.2015**
(21) Anmeldenummer: 12191010.3
(22) Anmeldetag: 02.11.2012
(51) Int. Cl.: H02G 1/08

(54) **Vorrichtung zum Einziehen eines biegeelastischen Elements**
Device for drawing in a flexible element
Dispositif d'introduction d'un élément élastique à la flexion

(30) Priorität: 03.11.2011 DE 202011107501 U
(43) Veröffentlichungstag der Anmeldung: 08.05.2013
(73) Patentinhaber: Katimex Cielker GmbH, 54584 Jünkerath (DE)
(72) Erfinder:
(74) Vertreter: Stenger, Watzke & Ring

(56) Entgegenhaltungen:
- EP-A1- 1 953 882
- EP-A1- 2 080 051
- EP-A1- 2 296 240
- DE-A1- 10 040 693
- FR-A1- 2 835 660
- JP-A- S63 171 105
- JP-A- 2000 217 240
- US-A- 5 938 180

## Beschreibung

Die Erfindung betrifft eine Vorrichtung zum Einziehen eines biegeelastischen Elements, beispielsweise eines Kabels in einen rohrförmigen Körper, beispielsweise ein Leerrohr, bestehend aus einem schubsteifen und zumindest begrenzt biegeelastischen Stabelement, beispielsweise einem Glasfaserstab und einem an einem Ende des Stabelements angeordneten Kupplungselement, welches eine Ummantelung aufweist und welches an seinem freien Ende mit dem einzuziehenden biegeelastischen Element verbunden werden kann, wobei die Ummantelung zumindest teilweise Zugkraft übertragend ausgebildet ist und wobei die vom Stabelement übertragbaren Zugkräfte zumindest teilweise von der Ummantelung übertragen werden.

Derartige Vorrichtungen sind im Stand der Technik (EP 2 296240 A1) bekannt. Mit derartigen Vorrichtungen werden beispielsweise Kabel in Leerrohre von Gebäuden eingezogen. Verwendet wird zu diesem Zweck ein biegeelastisches Stabelement, beispielsweise ein Glasfaserstab oder eine Stahlfeder, die einerseits aufwickelbar und andererseits schubsteif ist, um dieses Stabelement vom Ausgangspunkt aus in ein Leerrohr bis an den Endpunkt zu schieben. In diesem Bereich wird dann das biegeelastische Element, beispielsweise das Kabel an das biegeelastische Stabelement angekuppelt, woraufhin das biegeelastische Stabelement aus dem Leerrohr herausgezogen und das Kabel gleichzeitig in das Leerrohr eingezogen wird.

Zur Kupplung des Kabels an das biegeelastische Stabelement sind verschiedene Kupplungsvorrichtungen bekannt. Beispielsweise offenbart die EP 2 296 240 A1 eine Einziehfederspitze mit Fußstück. Diese Einziehfederspitze besteht aus einem flexiblem Teil, der zumindest teilweise aus Kunststoff besteht, und einem Kopfstück für Einziehfedern zum Einziehen von Leitungen in Rohre und Hohlräume. Der flexible Teil weist einen Zuganker auf, der das Fußstück mit Kopfstück verbindet, wobei der Zuganker mit einer Hülse aus Kunststoff umspritzt ist. Eine derartige Einziehfederspitze kann mit einem biegeelastischen Stabelement verbunden werden. Zu diesem Zweck muss an dem beigeelastischen Stabelement ein erstes Kupplungselement und an der Einziehfederspitze ein zweites, korrespondierendes Kupplungselement vorgesehen sein. In der Regel handelt es sich hierbei um eine Gewindehülse mit einem Innengewinde und einem Gewindestab, wobei das Gewinde des Gewindestabs korrespondierend mit dem Innengewinde der Gewindehülse ausgebildet ist.

Um ausreichend große Zugkräfte übertragen zu können bedarf es eine ausreichenden Länge des Gewindestabs und damit auch der Gewindehülse. Über diese Länge besteht eine relative Biegesteifigkeit der Kombination aus Stabelement und Einziehfederspitze. Diese Biegesteifigkeit ist letztendlich beschränkend hinsichtlich der Radien, durch welche das System aus Stabelement und Einziehfederspitze schiebbar ist. Es macht daher auch wenig Sinn, die Einziehfederspitze derart auszubilden, dass sie durch Biegungen mit einem engen Radius geschoben werden kann, wenn gleichzeitig diese Radien jedenfalls mit dem Kupplungselement nicht durchfahren werden können.

Ausgehend von diesem Stand der Technik liegt der Erfindung die **Aufgabe** zugrunde, die Nachteile des Standes der Technik zu vermeiden und insbesondere eine gattungsgemäße Vorrichtung derart auszubilden, dass Leerrohre mit Kurven enger Radien durchfahren werden können.

Die Lösung dieser Aufgabenstellung sieht vor, dass die Ummantelung aus einem Elastomer ausgebildet ist, dass das Kupplungselement in der Ummantelung eine in Längsachsenrichtung der Ummantelung ausgerichtete Aufnahme aufweist, in die das Stabelements eingreift wobei das Stabelement unverlierbar mit dem Kupplungselement verbunden ist.

Durch diese Ausgestaltung ist es möglich, das Kupplungselement unmittelbar mit dem Stabelement zu verbinden, da der Schwachpunkt für die Zugkraftübertragung nicht im Bereich der Kupplung liegt. Vielmehr werden die Zugkräfte über die gesamte Umhüllung auf das Stabelement übertragen. In Kombination mit der Biegeelastizität des Kupplungselementes und des Stabelementes sind somit enge Radien von Leerrohren durchfahrbar, wobei die Biegbarkeit der Kombination aus Stabelement und Kupplungselement nicht durch weitere das Kupplungselement mit dem Stabelement verbindende Bauteile negativ beeinflusst ist.

Nach einem weiteren Merkmal der Erfindung ist vorgesehen, dass das Kupplungselement eine zumindest begrenzte Biegeelastizität aufweist. Die Biegeelastizität sorgt dafür, dass sich das Kupplungselement nach Durchfahren eines Radius wieder in seine Ausgangserstreckung zurückbewegt, sodass auch bei längeren Leerrohren eine fehlerfreie Funktion gewährleistet ist. Vorzugsweise ist die Biegeelastizität des Kupplungselementes an die Biegeelastizität des Stabelementes angepasst, sodass die Biegeelastizität des Kupplungselementes zumindest der Biegeelastizität des Stabelementes entspricht. Die Ummantelung ist aus einem Elastomer ausgebildet, der einerseits die erforderliche Zugfestigkeit und andererseits eine damit verbundene ausreichende Biegeelastizität aufweist.

Nach der Erfindung ist vorgesehen, dass das Kupplungselement in der Ummantelung eine in Längsachsenrichtung der Ummantelung ausgerichtete Aufnahme aufweist, in die das Stabelement eingreift und das das Stabelement unverlierbar mit dem Kupplungselement verbunden ist. Vorzugsweise ist das Stabelement in diese Aufnahme eingeklebt. Ergänzend kann selbstverständlich auch ein formschlüssiges mechanisches Element vorgesehen sein, welches die Ummantelung und das Stabelement radial durchgreift. Denkbar ist hier beispielsweise ein Niet oder eine Schraubverbindung. Verklebung und formschlüssige Verbindung können additiv vorgesehen sein.

Es ist nach einem weiteren Merkmal der Erfindung vorgesehen, dass das Kupplungselement an seinem der Aufnahme gegenüberliegend angeordneten Ende ein Anschlusselement für eine lösbare Anordnung eines Verbindungselementes zum einzuziehenden biegeelastischen Element aufweist. Ein derartiges Verbindungselement kann beispielsweise ein sogenannter Kabelstrumpf sein, der mit dem Kupplungselement verbindbar ist. Das Anschlusselement kann beispielsweise als Kloben ausgebildet sein, der eine Öffnung aufweist, in welche ein haken- oder ringförmiges Element des Verbindungselements einsteckbar ist. Das Anschlusselement kann aber auch eine Schraubhülse sein, in die ein Gewindeabschnitt des Verbindungselementes einschraubar ist.

Zur Verbesserung der Zugfestigkeit kann vorgesehen sein, dass das Kupplungselement eine Seele aufweist, die von der Ummantelung umgeben ist. Die Seele ist hierbei insbesondere mit dem Anschlusselement verbunden. Das Anschlusselement kann form- und/oder kraftschlüssig mit der Seele verbunden, insbesondere verpresst sein. Die Ummantelung verbindet die Seele mit dem Stabelement und/oder die Seele und das Anschlusselement.

Vorzugsweise weist die Seele zumindest einen, vorzugsweise zwei oder mehr beabstandet zueinander angeordnete, über die Außenmantelfläche der Seele hervorstehende Vorsprünge auf, die in korrespondierende Ausnehmungen der Ummantelung eingreifen. Bei dieser Ausgestaltung wird in Abhängigkeit der Ummantelung ein Teil der Zugkräfte über die Ummantelung und ein weiterer Teil der Zugkräfte über die Seele übertragen. Es besteht auch die Möglichkeit bei dieser Ausgestaltung die Seele lediglich als die Biegeelastizität einstellendes Element auszubilden. Hier kommt beispielsweise ein Stahldraht in Frage, wobei dieser durch unterschiedliche Durchmesser über ihrer Länge unterschiedliche Elastizitätsmodule aufweisen kann. Die Seele kann somit erfindungsgemäß sowohl zur Einstellung der Biegeelastizität des Kupplungselementes als auch zur Zugkraftübertragung genutzt werden.

Eine Weiterbildung sieht darüber hinaus vor, dass die Vorsprünge als Ringelement ausgebildet sind, die ortsfest auf der Seele festgelegt sind. Die Ringelemente lassen sich produktionstechnisch in einfacher Weise über die Seele schieben und am vorbestimmten Ort mit der Seele verbinden. Hier kann beispielsweise eine Verklebung oder Punktverschweißung vorgesehen sein, sodass über die Ringelemente die erforderliche Zugfestigkeit gewährleistet wird.

Schließlich ist nach einem weiteren Merkmal der Erfindung vorgesehen, dass das Kupplungselement zu seinem freien Ende konisch zulaufend ausgebildet ist. Selbstverständlich besteht auch die Möglichkeit, die Konizität des Kupplungselementes in Richtung auf das Stabelement auszurichten.

Weitere Merkmale und Vorteile der Erfindung ergeben sich aus der nachfolgenden Beschreibung der zugehörigen Zeichnungen, in der bevorzugte Ausführungsformen der Erfindung dargestellt sind.

In den Zeichnungen zeigen:
- Fig. 1: einen Abschnitt einer Vorrichtung zum Einziehen eines biegeelastischen Elements in perspektivischer Ansicht;
- Fig. 2: die Vorrichtung gemäß Fig. 1 in Seitenansicht;
- Fig. 3: die Vorrichtung gemäß den Fign. 1 oder 2 in teilweise geschnitten dargestellter Seitenansicht;
- Fig. 4: eine zweite Ausführungsform der Vorrichtung gemäß Fig. 1 in Seitenansicht;
- Fig. 5: ein Anschlusselement für die Vorrichtung gemäß Fig. 4 in Seitenansicht;
- Fig. 6: eine dritte Ausführungsform der Vorrichtung gemäß Fig. 1 im Längsschnitt;
- Fig. 7: eine vierte Ausführungsform der Vorrichtung gemäß Fig. 1 im Längsschnitt;
- Fig. 8: ein Drahtelement mit einem Anschlusselement für die Vorrichtung gemäß Fig. 7 in Seitenansicht;
- Fig. 9: das Anschlusselement gemäß Fig. 8 in Seitenansicht und
- Fig. 10: eine vierte Ausführungsform eines Anschlusselementes im Längsschnitt.

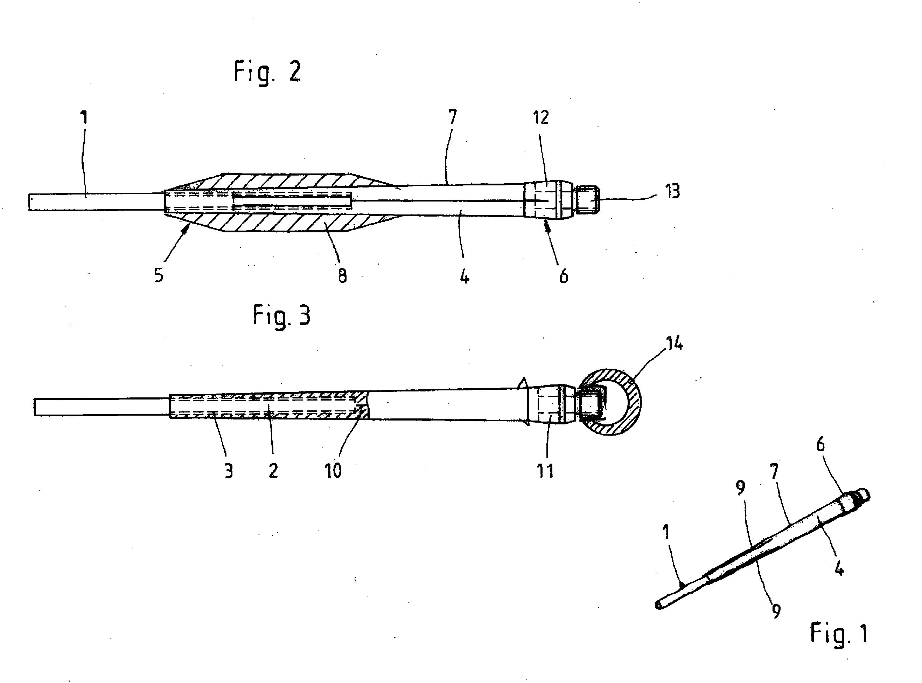

Eine in Fig. 1 dargestellte Vorrichtung zum Einziehen eines biegeelastischen Elements, beispielsweise eines Kabels in ein Leerrohr besteht aus einem zugsteifen und biegeelastischen Stabelement 1, welches als Glasfaserstab ausgebildet ist und demzufolge eine Glasfaserseele 2 (Fig. 3) und eine Kunststoffummantelung 3 (Fig. 3) aufweist. An das Stabelement 1 angeschlossen ist ein Kupplungselement 4, welches im Wesentlichen zylindrisch ausgebildet ist und eine in Längsrichtung verlaufende Öffnung 5 zur Aufnahme des Stabelements 1 hat. Die Öffnung 5 entspricht in ihrem Durchmesser dem Außendurchmesser des Stabelements 1, wobei gemäß Fig. 2 die Öffnung 5 in zwei Abschnitte unterteilt ist. Ein erster Abschnitt der Öffnung 5 nimmt einen von der Kunststoffummantelung 3 befreiten Abschnitt des Stabelements 1 auf, während ein zweiter Teil der Öffnung 5 das Stabelement bestehend aus der Glasfaserseele 2 und der Kunststoffummantelung 3 aufnimmt.

Am freien Ende des Kupplungselementes 4 ist ein Anschlusselement 6 angeflanscht, welches der lösbaren Anordnung eines nicht näher dargestellten Verbindungselementes zum einziehenden biegeelastischen Element, beispielsweise zu einem Kabel dient. Die Ausgestaltung des Anschlusselements 6 wird nachfolgend noch beschrieben.

Das Kupplungselement 4 weist eine Ummantelung 7 auf, die zugkraftübertragend ausgebildet ist. Die Ummantelung 7 besteht aus einem Elastomer, insbesondere einem thermoplastischen Polyurethan, wie er beispielsweise unter dem Handelsnamen "Desmopan" auf dem Markt erhältlich ist. Die Ummantelung 7 weist eine Shorehärte A von 50 bis 100 auf und ist biegeelastisch ausgebildet, sodass das Kupplungselement 4 zumindest im Bereich in dem nicht vom Stabelement 1 durchgriffenen Bereich eine gegenüber dem Stabelement 1 erhöhte Biegbarkeit aufweist. Die Biegbarkeit der gesamten Vorrichtung entspricht damit der Biegbarkeit des Stabelements 1, insoweit zwischen dem Stabelement 1 und dem Kupplungselement 4 keine weiteren Bauteile geringer Biegbarkeit, wie beispielsweise Verbindungselemente aus Metall vorgesehen sind.

Das Stabelement 1 ist in die Öffnung 5 derart eingeklebt, dass die vom Stabelement 1 übertragbaren Zugkräfte auf das Kupplungselement 4 übertragen werden können. Eine weitere Verbesserung der Verbindung zwischen dem Stabelement 1 und dem Kupplungselement 4 lässt sich durch eine in Figur 2 dargestellte Presshülse 8 erzielen, die im Bereich des Eingriffs des Stabelements 1 in die Öffnung 5 über die Ummantelung 7 geschoben und anschließend mit dem Stabelement 1 und dem Kupplungselement 4 verpresst ist.

Bei dieser Ausgestaltung kann es vorgesehen sein, die Ummantelung 7 im Bereich der Öffnung 5 durch in Längsrichtung der Ummantelung 7 verlaufende Schlitze 9 auszubilden, die bei der Montage der Ummantelung 7 auf dem Stabelement 1 eine Erweiterung der Öffnung 5 zulassen und die anschließend beim Aufsetzen der Presshülse 8 und dem nachfolgenden Pressvorgang geschlossen werden.

Somit können beispielsweise die Öffnung 5 mit einem Durchmesser ausgebildet werden, der geringfügig kleiner ist als der Außendurchmesser des Stabelementes 1 oder bei übereinstimmendem Durchmessern der Öffnung 5 und des Stabelements 1 die Öffnung 5 im Zuge des Pressvorgangs im Durchmesser verringert werden.

Die Ummantelung 7 des Kupplungselementes 4 kann geringfügig konisch ausgebildet sein, sodass sie sich vom Stabelement 1 zum Anschlusselement 6 im Durchmesser vergrößert.

Ergänzend kann ein Drahtelement 10 (Fig. 3) vorgesehen sein, welches das in das Kupplungselement 4 eingesteckte Ende des Stabelements 1 mit dem Anschlusselement 6 verbindet. Dieses Drahtelement 10 dient zum Einen der Erhöhung der mittels der Ummantelung 7 übertragbaren Zugkraft und erhöht darüber hinaus die Rückstellkräfte in der Ummantelung 7. Das Drahtelement 10 ist im Bereich des Anschlusselements 6 in einer Hülse 11 (Fig. 3) verpresst und mit dem Stabelement 1 verklebt. Zu diesem Zweck kann das Drahtelement 10 beispielsweise an seinem dem Stabelement 1 zugewandten Ende nach Art einer Schraubenfeder gewendelt ausgebildet sein, sodass dieses Ende das Stabelement 1, insbesondere die Glasfaserseele 2 halbschlüssig aufnimmt und mit der Presshülse 8 unter Zwischenschaltung eines Klebers verpresst, um ein zugfestes Element zu schaffen.

Anschlusselement 6 gemäß den Fign. 1 bis 3 besteht aus einem Gehäuse 12, welches die Ummantelung 7 übergreift. Das Gehäuse 12 ist rotationssymmetrisch ausgebildet und weist im Wesentlichen die Form eines Hohlzylinders auf, der im Bereich seines freien Endes mit einem Gewindeabschnitt 13 abgedeckt ist. Der Gewindeabschnitt 13 kann beispielsweise mit der Hülse 11 einstückig ausgebildet sein und dient der Aufnahme eines beispielsweise in Fig. 3 dargestellten Verbindungselementes 14 in Form eines auf dem Gewindeabschnitt 13 aufschraubbaren Ringes, an den beispielsweise ein Kabelstrumpf üblicher Ausgestaltung angekuppelt werden kann.

Das Gehäuse 12 der Hülse 11 ist mit der Ummantelung 7 verklebt und verpresst.

Die Presshülse 8, die sich auf der Außenmantelfläche der Ummantelung 7 befindet ist an ihren beiden Enden mit Schrägflächen ausgebildet, die unter einem spitzen Winkel zur Außenmantelfläche der Ummantelung 7 verlaufen, sodass die Presshülse 8 weder den Vorschub noch das Zurückziehen einer in den Fign. 1 bis 3 dargestellten Vorrichtung behindert und beispielsweise an im Leerrohr vorhandenen Vorsprüngen oder Kanten hängen bleibt, wodurch hohe Zugkräfte im Stabelement 1 und damit auch im Kupplungselement 3 entstehen könnten.

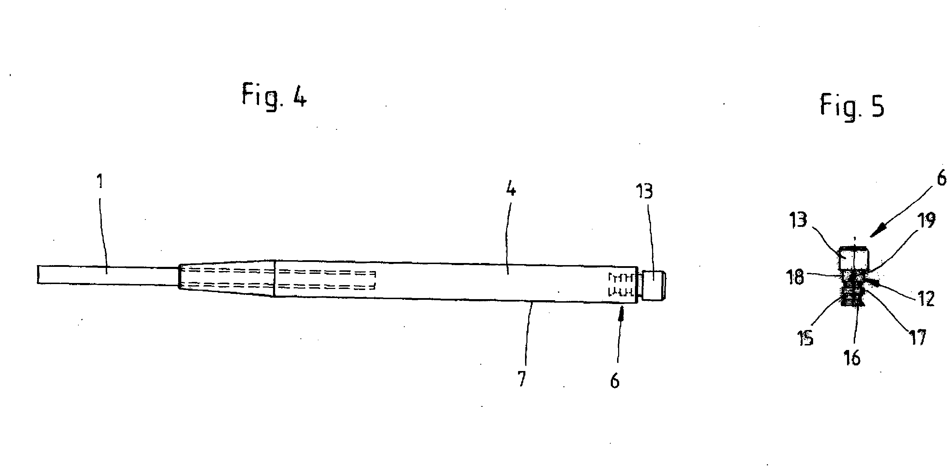

Ein zweites Anschlusselement 6 ist in den Fign. 4 und 5 dargestellt, wobei Fig. 4 eine durch dieses Anschlusselement 6 gekennzeichnete zweite Ausführungsform der Vorrichtung gemäß den Fign. 1 bis 3 zeigt.

Das in Fig. 5 dargestellte Anschlusselement 6 weist den Gewindeabschnitt 13 und das sich daran in Längsrichtung erstreckende Gehäuse 12 auf, welches rotationssymmetrisch ausgebildet ist und einen Mittelabschnitt 15 aufweist, der sich bis in den Gewindeabschnitt 13 erstreckt. Der Mittelabschnitt 15 weist in seinem Mittelbereich einen scheibenförmigen Vorsprung auf, dessen Durchmesser größer ist, als der Durchmesser des Mittelabschnitts 15. Endseitig, das heißt an dem den Gewindeabschnitt 13 abgewandten Ende des Gehäuses 12 ist ein weiterer Vorsprung 16 vorgesehen, der ebenfalls einen gegenüber dem Mittelabschnitt 15 vergrößerten Durchmesser aufweist, wobei dieser Vorsprung 16 über eine Schrägfläche in den Mittelabschnitt 15 übergeht. Schließlich weist der Mittelabschnitt 15 eine weitere Durchmesservergrößerung 18 auf, die in den Gewindeabschnitt 13 übergeht, der wiederum gegenüber dieser Durchmesservergrößerung 18 einen vergrößerten Durchmesser aufweist. Im Bereich des Mittelabschnitts 15 ist eine radial verlaufende Bohrung 19 Niets dienen kann, dass die Ummantelung 7 und das Anschlusselement 6 durchgreift, sodass zwischen der Ummantelung 7 und dem Anschlusselement 6 eine formschlüssige Verbindung möglich ist.

Ergänzend ist in Fig. 5 zu erkennen, dass die Ummantelung 7 an ihren dem Stabelement 1 zugewandten Ende konisch und im Übrigen zylindrisch ausgebildet ist.

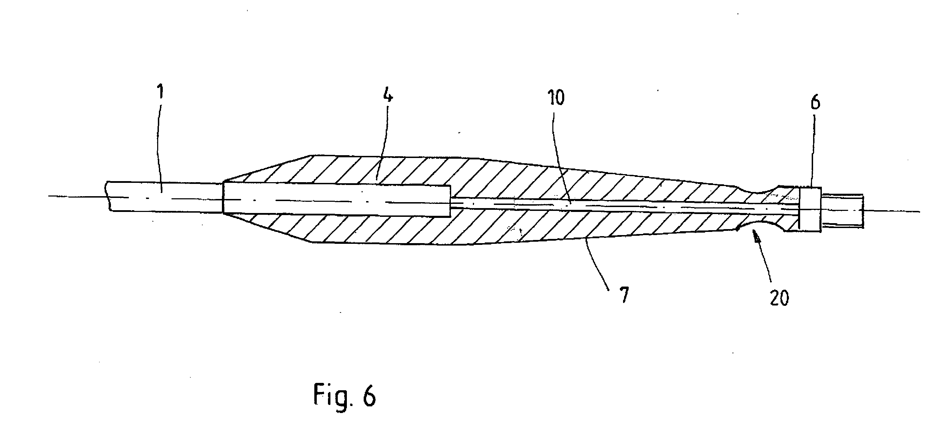

In Fig. 6 ist eine weitere Ausgestaltung einer erfindungsgemäßen Vorrichtung dargestellt. Dem Grunde nach entspricht die konstruktive Ausgestaltung dieser Vorrichtung nach Fig. 6 den zuvor beschriebenen Ausgestaltungen gemäß den Fign. 1 bis 5. Unterschiede sind im Bereich der Formengebung der Ummantelung 7 zu erkennen. So zeigt die Fig. 6 eine Ummantelung 7, die sowohl in Richtung auf das Anschlusselement 6 als auch in Richtung auf das Stabelement 1 konisch ausgebildet ist, wobei im Bereich mit der Öffnung 5 ein zylindrischer Abschnitt angeordnet ist. Es ist ein Drahtelement 10 vorgesehen, welches das Stabelement 1 mit dem Anschlusselement 6 verbindet. Die Ausführungsform gemäß Fig. 6 hat darüber hinaus im Bereich des dem Anschlusselement 6 zugewandten Endes der Ummantelung 7 eine im Querschnitt kreisbogenabschnittförmig ausgebildete Ringnut 20, die die Flexibilität des Kupplungselements 4 in diesem Bereich erhöht.

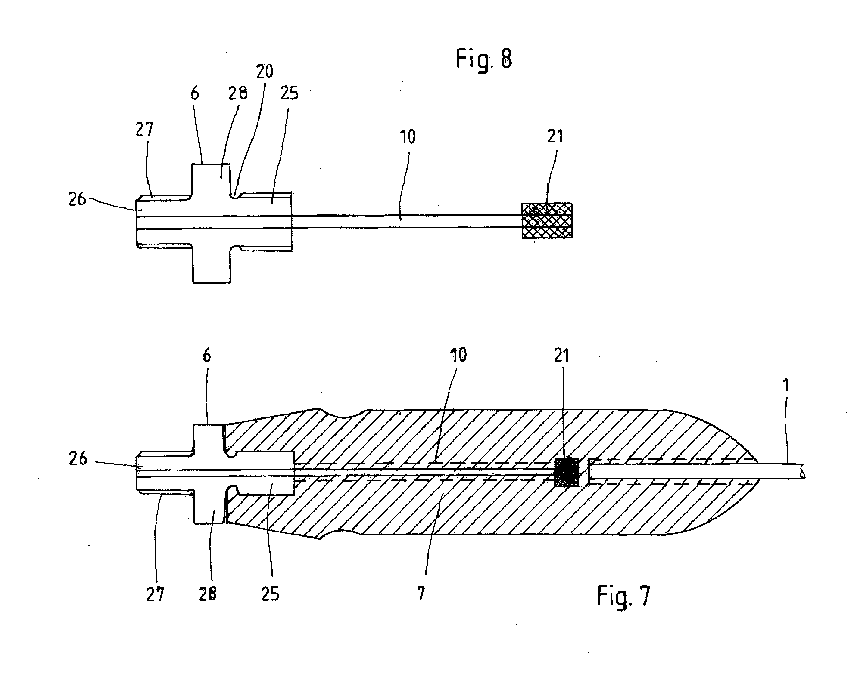

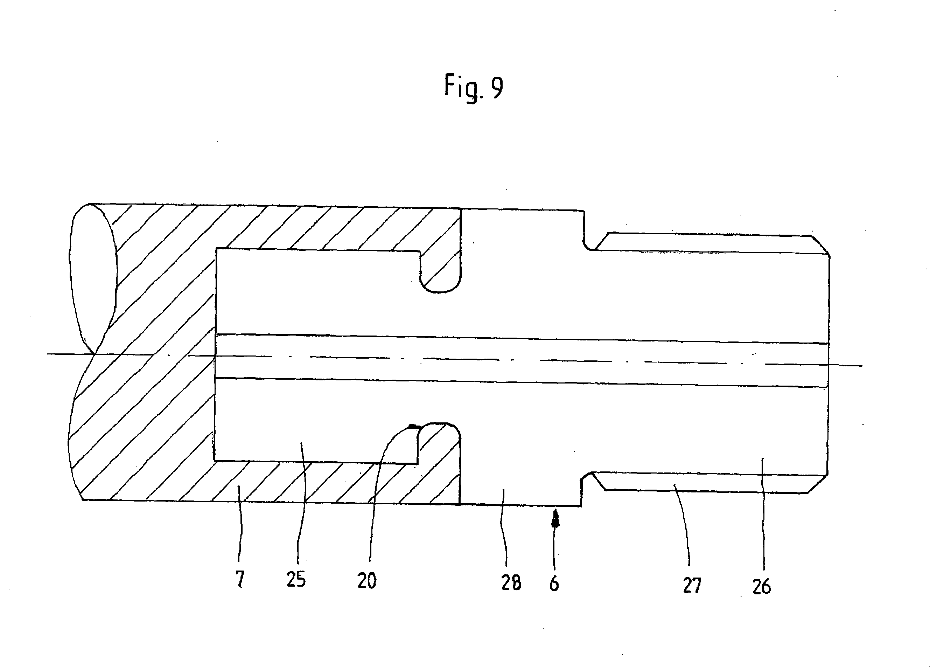

In den Fign. 7 bis 9 ist eine weitere bevorzugte Ausführungsform einer Vorrichtung dargestellt. Hierbei zeigt Fig. 7 die vollständige Vorrichtung im Querschnitt, die Fig. 8 das Drahtelement 10 mit dem Anschlusselement 6 und einer Presshülse 21 in Seitenansicht und Fig. 9 das Anschlusselement 6 gemäß den Fign. 7 und 8.

Gemäß den Fign. 7 und 8 ist das Drahtelement 10, welches die Seele darstellt, fest mit dem als Messinghülse ausgebildeten Anschlusselement 6 verbunden. Zu diesem Zweck durchgreift das Drahtelement 10 das Anschlusselement 6 und ist mit der Messinghülse zumindest im Bereich eines ersten Abschnitts verpresst. Hierzu ist eine Sechskantverpressung in diesem Abschnitt 25 vorgesehen.

Das Anschlusselement 6 weist des Weiteren einen Abschnitt 26 mit einem Außengewinde 27 auf. Zwischen den beiden Abschnitten 25 und 26 ist ein Mittelabschnitt 28 vorgesehen, dessen Durchmesser größer ist, als der Durchmesser der beiden Abschnitte 25 und 26.

Des Weiteren ist in Fign. 7 und 8 eine Ringnut 20 zwischen dem Abschnitt 25 und dem Mittelabschnitt 28 zu erkennen. Diese Ringnut 20 dient dem Eingriff der Ummantelung 7, sodass die Ummantelung 7 aus einem ausgehärteten Polymer in Zugrichtung formschlüssig mit dem Anschlusselement 6 verbunden ist.

Ergänzend kann vorgesehen sein, dass der Abschnitt 25 im Bereich seiner Außenmantelfläche eine reibungserhöhende Beschichtung oder Formgestaltung aufweist, die ebenfalls zu einer erhöhten Zugbelastbarkeit der Ummantelung 7 relativ zum Anschlusselement 6 beiträgt.

Die am gegenüberliegenden Ende des Drahtelements 10 angeordnete Presshülse 21 ist hohlzylindrisch ausgebildet, wobei diese Presshülse 21 eine Bohrung aufweist, deren Durchmesser mit dem Außendurchmesser des Drahtelements 10 übereinstimmt. Der Außendurchmesser der Presshülse 21 ist demgegenüber größer als der Durchmesser des Drahtelements 10. Die Presshülse 21 nimmt demzufolge das Drahtelement 10 auf und wird mit dem Drahtelement 10 verpresst.

Ferner kann vorgesehen sein, dass die Presshülse 21 im Bereich ihrer Außenmantelfläche eine reibungserhöhende Formgebung, beispielsweise eine Vielzahl von Nuten aufweist, in die ebenfalls Polymermaterial der Ummantelung 7 bei der Herstellung der Vorrichtung eindringen kann, sodass auch hier eine in Zugrichtung formschlüssige Verbindung ausgebildet wird.

Aus Fig. 7 ist ferner zu erkennen, dass das Stabelement 1 ausschließlich mit der Ummantelung 7 und nicht mit der Presshülse 21 verbunden ist. Die Herstellung dieser Vorrichtung erfolgt durch Anspritzen der Ummantelung 7 an das vorgefertigte Bauteil bestehend aus dem Drahtelement 10, der Presshülse 21 und das Anschlusselement 6. Ferner wird bei diesem Vorgang auch die Verbindung zwischen dem Stabelement 1 und der Ummantelung 7 hergestellt.

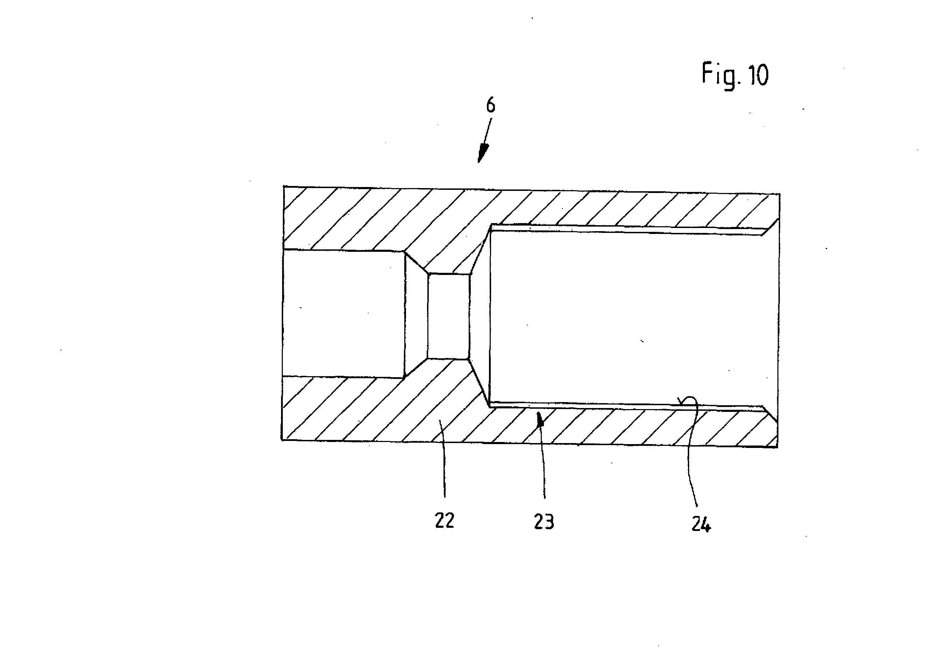

Ferner zeigt Fig. 10 eine weitere Ausführungsform eines Anschlusselements 6 mit einem zylindrischen Gehäuse 22, welches eine in Axialrichtung verlaufende Bohrung 23 aufweist, die drei Abschnitte unterschiedlicher Durchmesser aufweist. In einem mittleren Abschnitt weist die Bohrung den geringsten Durchmesser auf, von wo aus sich die Bohrung 23 in Richtung beider axialen Enden des Anschlusselementes 6 konisch in einen weiteren zylindrischen Bereich erweitert. Die beiden außenliegenden und zu Stirnflächen geöffneten Abschnitte der Bohrung 23 dienen zum Einen der Aufnahme des dafür vorgesehenen Abschnitts der Ummantelung 7 gemäß Fig. 8 und weisen zum Anderen ein Innengewinde 24 auf, welches der Verbindung mit einem nicht näher dargestellten Verbindungselement dient.

Die in den Fign. 9 bis 11 dargestellten Anschlusselemente 6 haben Längen zwischen 6 und 12 mm und sind daher derart kurz ausgebildet, dass sie die Biegbarkeit der erfindungsgemäßen Vorrichtung im Wesentlichen nicht negativ beeinflussen, sodass auch eine mit diesen Anschlusselementen 6 versehene Vorrichtung in Leerrohren mit Biegungen kleiner Radien einsetzbar sind.

### Bezugszeichenliste

- 1: Stabelement
- 2: Glasfaserseele
- 3: Kunststoffummantelung
- 4: Kupplungselement
- 5: Öffnung
- 6: Anschlusselement
- 7: Ummantelung
- 8: Presshülse
- 9: Schlitz
- 10: Drahtelement
- 11: Hülse
- 12: Gehäuse
- 13: Gewindeabschnitt
- 14: Verbindungselement
- 15: Mittelabschnitt
- 16: Vorsprung
- 17: Vorsprung
- 18: Durchmesservergrößerung
- 19: Bohrung
- 20: Ringnut
- 21: Presshülse
- 22: Gehäuse
- 23: Bohrung
- 24: Innengewinde
- 25: Abschnitt
- 26: Abschnitt
- 27: Außengewinde
- 28: Mittelabschnitt

## Patentansprüche

1. Vorrichtung zum Einziehen eines biegeelastischen Elements, beispielsweise eines Kabels in einen rohrförmigen Körper, beispielsweise ein Leerrohr, bestehend aus einem schubsteifen und zumindest begrenzt biegeelastischen Stabelement (1), beispielsweise einem Glasfaserstab und einem an einem Ende des Stabelements (1) angeordneten Kupplungselement (4), welches eine Ummantelung (7) aufweist und welches an seinem freien Ende mit dem einzuziehenden biegeelastischen Element verbunden werden kann, wobei die Ummantelung (7) zumindest teilweise Zugkraft übertragend ausgebildet ist, und wobei die vom Stabelement übertragbaren Zugkräfte zumindest teilweise von der Ummantelung übertragen werden,
**dadurch gekennzeichnet,**
**dass** die Ummantelung (7) aus einem Elastomer ausgebildet ist, und dass das Kupplungselement (4) in der Ummantelung (7) eine in Längsachsenrichtung der Ummantelung (7) ausgerichtete Aufnahme (5) aufweist, in die das Stabelement (1) eingreift wobei das Stabelement (1) unverlierbar mit dem Kupplungselement (4) verbunden ist.

2. Vorrichtung nach Anspruch 1,
**dadurch gekennzeichnet,**
**dass** das Kupplungselement (4) eine zumindest begrenzte Biegeelastizität aufweist.

3. Vorrichtung nach einem der Ansprüche 1 oder 2,
**dadurch gekennzeichnet,**
**dass** das Kupplungselement (4) an seinem der Aufnahme (5) gegenüberliegend angeordneten Ende ein Anschlusselement (6) für eine lösbare Anordnung eines Verbindungselementes (14) zum einzuziehenden biegeelastischen Element aufweist.

4. Vorrichtung nach einem der Ansprüche 1 bis 3,
**dadurch gekennzeichnet,**
**dass** das Kupplungselement (4) eine Seele (10) aufweist, die von der Ummantelung (7) umgeben ist.

5. Vorrichtung nach den Ansprüchen 1, 3 und 4,
**dadurch gekennzeichnet,**
**dass** die Ummantelung (7) die Seele (10) und das Stabelement (1) und/oder die Seele (10) und das Anschlusselement (6) miteinander verbindet.

6. Vorrichtung nach einem der Ansprüche 4 bis 5,
**dadurch gekennzeichnet,**
**dass** die Seele (10) zumindest einen, vorzugsweise zwei oder mehr beabstandet zueinander angeordnete, über ihre Außenmantelfläche hervorstehende Vorsprünge aufweist, die in korrespondierende Ausnehmungen der Ummantelung (7) eingreifen.

7. Vorrichtung nach einem der Ansprüche 1 bis 6,
**dadurch gekennzeichnet,**
**dass** das Stabelement (1) mit der Ummantelung (7) im Bereich der Aufnahme (5) verklebt ist.

8. Vorrichtung nach Anspruch 6,
**dadurch gekennzeichnet,**
**dass** die Vorsprünge als Ringelemente ausgebildet sind, die ortsfest auf der Seele (10) festgelegt sind.

9. Vorrichtung nach einem der Ansprüche 4 bis 6 oder 8,
**dadurch gekennzeichnet,**
**dass** die Seele (10) als Stahldraht ausgebildet ist.

10. Vorrichtung nach einem der Ansprüche 1 bis 9,
**dadurch gekennzeichnet,**
**dass** das Kupplungselement (4) zu seinem freiem Ende konisch zulaufend ausgebildet ist.

11. Vorrichtung nach einem der Ansprüche 4 bis 6 oder 8 bis 9,
**dadurch gekennzeichnet,**
**dass** die Seele (10) mit dem Anschlusselement (6) form- und/oder kraftschlüssig verbunden, insbesondere verpresst ist.

## Claims

1. A device for drawing in a flexible element, for example a cable into a tubular body, for example an empty tube, composed of a rigid rod element (1) that is flexible to at least a limited extent, for example a glass fiber rod, and a coupling element (4) arranged at one end of the rod element, which coupling element comprises a jacket (7) and can be connected at its free end to the flexible element to be drawn in, wherein the jacket (7) is at least partially able to transmit traction force, and wherein the traction forces which can be transmitted by the rod element are at least partially transmitted by the jacket,
**characterized in that**
the jacket (7) is made of an elastomer and that the coupling element (4) comprises a receiving portion (5) located in the jacket (7) and oriented in the direction of the longitudinal axis of the jacket, into which receiving portion the rod element (1) engages, wherein the rod element (1) is connected in a captive manner to the coupling element (4).

2. A device according to claim 1,
**characterized in that**
the coupling element (4) at least comprises a limited bending elasticity.

3. A device according to one of the claims 1 or 2,
**characterized in that**
the coupling element (4) comprises, at its end located opposite the receiving portion (5), a connection element (6) for a detachable arrangement of a connecting element (14) for the connection with the flexible element to be drawn in.

4. A device according to one of the claims 1 through 3,
**characterized in that**
the coupling element (4) comprises a core (10) which is surrounded by the jacket (7).

5. A device according to the claims 1, 3 and 4,
**characterized in that**
the jacket (7) connects the core (10) and the rod element (1) and/or the core (10) and the connection element (6) to each other.

6. A device according to one of the claims 4 through 5,
**characterized in that**
the core (10) comprises at least one, preferably two or more projections spaced from each other which project from the outer cover surface of the core and engage in corresponding recesses of the jacket (7).

7. A device according to one of the claims 1 through 6,
**characterized in that**
the rod element (1) is glued to the jacket (7) in the area of the receiving portion (5).

8. A device according to claim 6,
**characterized in that**
the projections are designed as ring elements which are fixed in a stationary manner on the core (10).

9. A device according to one of the claims 4 through 6 or 8,
**characterized in that**
the core (10) is a steel wire.

10. A device according to one of the claims 1 through 9,
**characterized in that**
the coupling element (4) is tapering towards the free end thereof.

11. A device according to one of the claims 4 through 6 or 8 through 9,
**characterized in that**
the core (10) is connected to, especially pressed together with the connection element (6) in an interlocking and/or form-fitting manner.

## Revendications

1. Dispositif destiné à tirer un élément élastique en flexion, par exemple un câble, dans un corps tubulaire, par exemple un tuyau vide, composé d'un élément de barre (1) rigide en poussée et élastique en flexion au moins de façon limitée, par exemple une barre en fibres de verre, et d'un élément d'accouplement (4) disposé à une extrémité de l'élément de barre, lequel élément d'accouplement comprend une enveloppe (7) et peut être relié, à son extrémité libre, à l'élément élastique en flexion qu'il faut tirer, l'enveloppe (7) étant configuré de sorte qu'elle peut au moins partiellement transmettre une force de traction, et les forces de traction pouvant être transmises par l'élément de barre étant au moins partiellement transmises par l'enveloppe,
**caractérisé en ce que**
l'enveloppe (7) est faite d'un élastomère et que l'élément d'accouplement (4) comprend un logement (5) formé dans l'enveloppe (7) et orienté dans la direction de l'axe longitudinal de l'enveloppe (7), dans lequel logement s'engrène l'élément de barre (1), l'élément de barre étant relié de manière imperdable à l'élément d'accouplement (4).

2. Dispositif selon la revendication 1,
**caractérisé en ce que**
l'élément d'accouplement (4) comprend au moins une élasticité en flexion limitée.

3. Dispositif selon l'une des revendications 1 ou 2,
**caractérisé en ce que**
l'élément d'accouplement (4) comprend, à son extrémité opposée au logement (5), un élément de jonction (6) destiné à permettre une disposition amovible d'un élément de liaison (14) destiné à une liaison avec l'élément élastique en flexion qu'il faut tirer.

4. Dispositif selon l'une des revendications 1 à 3,
**caractérisé en ce que**
l'élément d'accouplement (4) comprend un noyau (10) qui est entouré par l'enveloppe (7).

5. Dispositif selon les revendications 1, 3 et 4,
**caractérisé en ce que**
l'enveloppe (7) relie le noyau (10) et l'élément de barre (1) et/ou le noyau (10) et l'élément de jonction (6) l'un à l'autre.

6. Dispositif selon l'une des revendications 4 à 5,
**caractérisé en ce que**
le noyau (10) comprend au moins une, de préférence deux ou plusieurs saillies espacées l'une de l'autre et faisant saillie à partir de la surface enveloppe extérieure du noyau, lesquelles s'engrènent dans des évidements correspondants de l'enveloppe (7).

7. Dispositif selon l'une des revendications 1 à 6,
**caractérisé en ce que**
l'élément de barre (1) est collé à l'enveloppe (7) dans la zone du logement (5).

8. Dispositif selon la revendication 6,
**caractérisé en ce que**
les saillies sont configurées comme des éléments annulaires qui sont fixés de manière stationnaire sur le noyau (10).

9. Dispositif selon l'une des revendications 4 à 6 ou 8,
**caractérisé en ce que**
le noyau (10) est en forme de fil d'acier.

10. Dispositif selon l'une des revendications 1 à 9,
**caractérisé en ce que**
l'élément d'accouplement (4) s'effile vers son extrémité libre.

11. Dispositif selon l'une des revendications 4 à 6 ou 8 à 9,
**caractérisé en ce que**
le noyau (10) est relié à, notamment pressé avec l'élément de jonction (6) par une liaison par la forme et/ou par la force.
